# EUROPÄISCHE PATENTSCHRIFT

(11) **EP 1 215 790 B1**
(45) Veröffentlichungstag und Bekanntmachung des Hinweises auf die Patenterteilung: **23.04.2003**
(21) Anmeldenummer: 01126394.4
(22) Anmeldetag: 07.11.2001
(51) Int. Cl.: H02G 5/02, H02B 1/21

(54) **Befestigungsmechanismus für eine elektrische Sammelschienenkomponente**
Mechanism for fixing a bus bar component
Mécanisme de fixation d'un composant d'un jeu de barres de distribution

(30) Priorität: 15.12.2000 DE 10062642
(43) Veröffentlichungstag der Anmeldung: 19.06.2002
(73) Patentinhaber: Jean Müller GmbH Elektrotechnische Fabrik, 65343 Eltville (DE)
(72) Erfinder: Bollmann, Dipl.-Ing. Johannes, 48231 Warendorf (DE)
(74) Vertreter: Quermann, Helmut, Dipl.-Ing.

(56) Entgegenhaltungen:
- EP-A- 0 170 161
- DE-C- 4 329 428

## Beschreibung

Die Erfindung betrifft einen Mechanismus für eine elektrische Sammelschienenkomponente, mit einem Basiselement zur Aufnahme der Sammelschienenkomponente und am Basiselement angeordneten hakenartigen Vorsprüngen zum Aufstecken auf die Sammelschienen, sowie mindestens einer um eine parallel zur Längsachse einer Sammelschiene schwenkbaren Verriegelungseinrichtung zum Festlegen der Sammelschiene zwischen der Verriegelungseinrichtung und dem dieser Sammelschiene zugeordneten hakenartigen Vorsprung in Querrichtung der Sammelschiene.

Es werden die unterschiedlichsten elektrischen Sammelschienenkomponenten an elektrischen Sammelschienen befestigt. Bei diesen Sammelschienenkomponenten handelt es sich zum Beispiel um Leistungsschalter, Trenner, Geräteadapter, Reitersicherungssockel. Diese sind mit dem integrierten Basiselement versehen oder mit dem Basiselement verbunden. Das Basiselement stellt die eigentliche Verbindung zu den Sammelschienen her.

Aus der DE 89 03 582 U1 ist ein Befestigungsmechanismus der eingangs genannten Art bekannt. Dort nimmt das Basiselement die separate Verriegelungseinrichtung auf, die als im Basiselement schwenkbarer Klemmhebel ausgebildet ist. Dieser ist mit einem federnden Ansatz versehen, der sich am Basiselement abstützt. Auf der dem Ansatz abgewandten Seite ist der Klemmhebel mit mehreren stufenartigen Vorsprüngen versehen, wobei jeweils ein Vorsprung auf das Stärkemaß der zugeordneten Sammelschiene abgestimmt ist Es ist infolgedessen eine Verriegelung unterschiedlich starker Sammelschienen mittels dieser Verriegelungseinrichtung möglich. - Nachteilig ist bei dem bekannten Befestigungsmechanismus der komplizierte Aufbau und die Mehrteiligkeit. Dies bedingt einen recht hohen Montage- und Handlingsaufwand. Der Mechanismus zum Entriegeln des Befestigungsmechanismus ist nur schwer zugänglich.

Aus der DE 43 29 428 Cl ist ein Befestigungsmechanismus bekannt, der ähnlich wie der in der DE 89 03 582 U1 beschriebene ausgestaltet ist. Statt einem Klemmhebel finden allerdings mehrere schwenkbar angeordnete Klemmhebel Verwendung, wobei jeder Klemmhebel einem bestimmten Stärkemaß der Sammelschiene zugeordnet ist

In dem DE 74 09 895 U1 ist ein Trag- bzw. Stützkörper für Stromschienen unterschiedlichen Querschnitts beschrieben, der einteilig ist und die jeweilige Stromschiene zwischen einem Tragteil und einer über ein Filmschanier angelenkten Abdeckung klemmt

Aufgabe der Erfindung ist es, einen besonders einfach gestalteten und einfach zu montierenden Befestigungsmechanismus für die elektrische Sammelschienenkomponente zu schaffen.

Gelöst wird die Aufgabe bei einem Befestigungsmechanismus der eingangs genannten Art dadurch, daß dieser einteilig ausgebildet ist und die Verriegelungseinrichtung ein plattenförmiges Element, das mit einer stirnseitigen Kontaktfläche für die Sammelschiene versehen ist, sowie ein das plattenförmige Element aufnehmendes Lagerelement, das schwenkbar an das Basiselement angebunden ist, aufweist.

Wesentlich ist bei dem erfindungsgemäßen Befestigungsmechanismus zunächst, dass er einteilig ausgebildet ist. Hierbei ist insbesondere daran gedacht, dass es sich um ein Spritzgussteil handelt, das insbesondere aus isolierendem Material besteht. Als besonders vorteilhaft wird es angesehen, wenn ein Thermoplast Verwendung findet. Das Basiselement selbst weist bevorzugt Leistenform auf.

Aufgrund der Einteiligkeit des Befestigungsmechanismus entfallen Montagevorgänge bei der Herstellung des Mechanismus. Das Produkt kann damit kostengünstig hergestellt werden. Auch die Montage des Befestigungsmechanismus an den Sammelschienen ist äußerst einfach. So ist das Basiselement auf die Sammelschienen aufzustecken, wobei die hakenartigen Vorsprünge am Basiselement die Sammelschienen hintergreifen. Beim Aufstecken wird die nachgiebig im Basiselement gelagerte Verriegelungseinrichtung infolge des Kontaktes mit der dieser zugeordneten Sammelschiene geringfügig verschwenkt und gelangt, nach dem Passieren dieser Sammelschiene, aufgrund des Rückstellvermögens, selbsttätig in die Ausgangsposition. In dieser Stellung hintergreift die stirnseitige Kontaktfläche der Verriegelungseinrichtung die Sammelschiene. Der Befestigungsmechanismus kann nur dann, wenn die Verriegelungseinrichtung aktiv, das heißt von einer Bedienperson, in die entriegelte Stellung zurückverschwenkt wird, von den Sammelschienen abgezogen werden. Der weitere Vorteil des erfindungsgemäßen Befestigungsmechanismus besteht damit in der sehr einfachen Bedienbarkeit des Mechanismus und insbesondere der Verriegelungseinrichtung.

Baulich besonders einfach und unter Funktionsgesichtspunkten optimiert, ist die Anbindung des das plattenförmige Element der Verriegelungseinrichtung aufnehmenden Lagerelementes an das Basiselement dann gestaltet, wenn es beidseitig über Stege mit dem Basiselement verbunden ist. Ausschließlich diese Stege dienen damit der Verbindung der Verriegelungseinrichtung mit dem Basiselement und es werden auch nur über diese Stege die beim Schwenken des Lagerelementes und damit des plattenförmigen Elementes in das Lagerelement eingebrachten Kräfte auf das Basiselement übertragen. Aufgrund dieser definierten Krafteinleitung kann eine optimale Dimensionierung der Stege erfolgen. Vorzugsweise sind die Stege unter dem Aspekt der Torsion der Stege weich ausgebildet Im Gegensatz hierzu ist anzustreben, dass eine hohe Festigkeit in Längsrichtung der Verriegelungseinrichtung sichergestellt ist. Bewerkstelligt wird dies auf einfachste Art und Weise dadurch, dass das plattenförmige Element, in Bezug auf die Plattenebene, steif ausgebildet ist. Schließlich ist es von Wichtigkeit, dass die Anbindung des Betätigers zur Entriegelung, vorstehend die Anbindung des Lagerelementes an das plattenförmige Element, relativ fest im Sinne von biegesteif ist. Um dies zu bewerkstelligen, wird vorgeschlagen, im Bereich der Verbindung von plattenförmigem Element und Lagerelement einen mit diesem verbundenen Versteifungssteg anzuordnen. Das Lagerelement selbst kann beispielsweise als kastenförmiges Element ausgebildet sein, das mit einem Einführschlitz für ein Werkzeug versehen ist. Wird beispielsweise ein Schraubendreher in den Schlitz eingesteckt, kann über eine Schwenkbewegung des Schraubendrehers die Schwenkbewegung des Lagerelementes zum Überführen des plattenförmigen Elementes in die entriegelte Stellung der Verriegelungseinrichtung herbeigeführt werden.

Der erfindungsgemäße Befestigungsmechanismus kann bei allen Komponenten, die für eine Sammelschienenmontage vorgesehen sind, verwendet werden. Es ist insbesondere daran gedacht, daß der Mechanismus als separates Adapterteil ausgebildet ist, das mit den unterschiedlichsten Sammelschienenkomponenten verbunden werden kann. Aufgrund der äußerst einfachen Gestaltung des Befestigungsmechanismus und der Möglichkeit, diesen sehr preisgünstig herzustellen, können für unterschiedliche Sammelschienenbreiten unterschiedliche Mechanismustypen bevorratet werden, wobei der jeweilige Mechanismustyp auf eine Sammelschienenbreite abgestimmt ist.

Weitere Merkmale der Erfindung sind in der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

In den Figuren ist die Erfindung anhand eines Ausführungsbeispieles dargestellt, ohne hierauf beschränkt zu sein. Es zeigt:

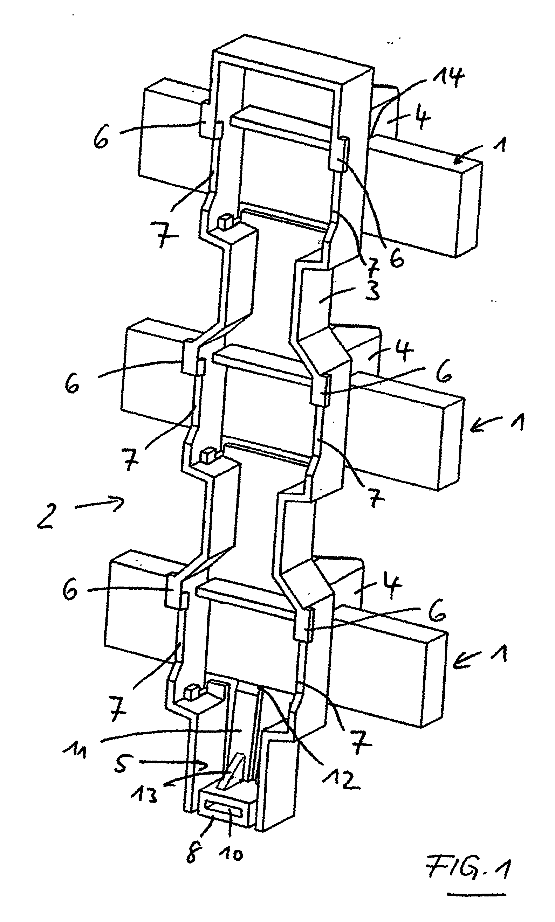

- Figur 1: eine räumliche Frontansicht des als separates Bauteil ausgebildeten Befestigungsmechanismus, der auf Sammelschienen aufgesteckt ist,

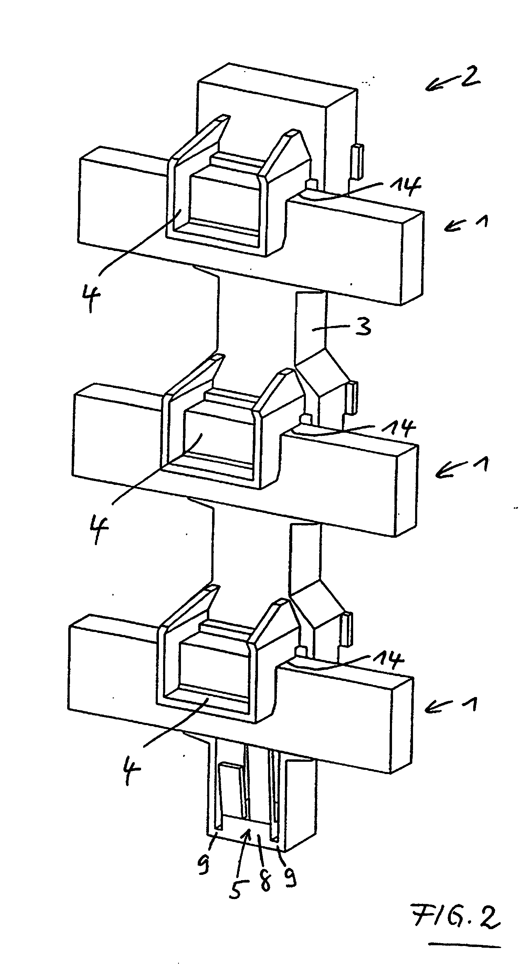

- Figur 2: eine räumliche Rückansicht der in Figur 1 gezeigten Anordnung und

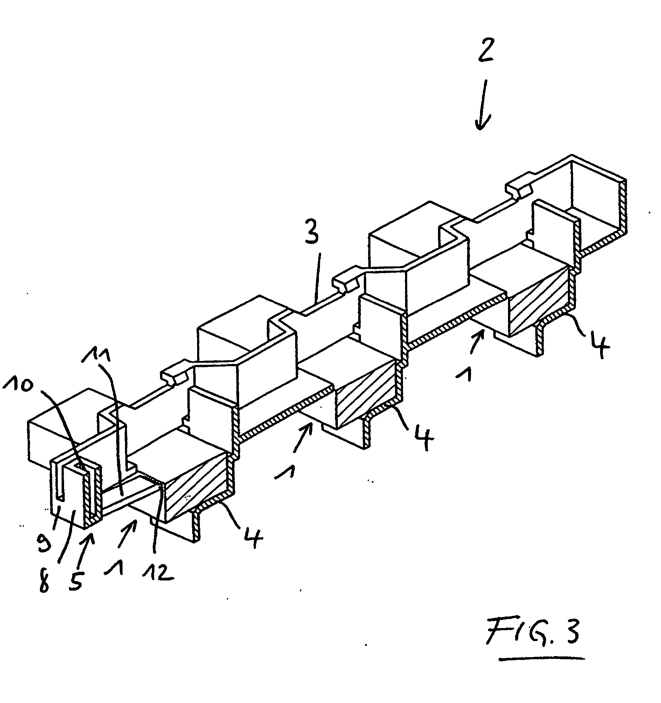

- Figur 3: einen Schnitt durch die in den Figuren 1 und 2 gezeigte Anordnung.

Drei Sammelschienen 1 sind horizontal übereinander angeordnet. Sie sind hochkant platziert und weisen rechteckigen Querschnitt auf. Von oben ist auf die Sammelschienen 1 ein als separates Bauteil ausgebildeter einteiliger Befestigungsmechanismus 2 aufgesteckt. Dieser ist durch ein leistenförmiges Basiselement 3 zur Aufnahme der nicht gezeigten Sammelschienenkomponente, bei der es sich beispielsweise um einen Geräteadapter handelt, ferner durch drei mit dem im wesentlichen leistenförmigen Basiselement verbundene hakenartige Vorsprünge 4 zum Aufstecken auf die Sammelschienen 1, sowie eine der unteren Sammelschiene 1 zugeordnete Verriegelungseinrichtung 5 gebildet.

Zum Verbinden des Basiselementes 3 mit der Sammelschienenkomponente weist das Basiselement 3 auf seiner den Vorsprüngen 4 abgewandten Seite seitliche Vorsprünge 6 auf, die in eine Hintergriffsstellung mit Vorsprüngen der Sammelschienenkomponente bringbar sind. Hinterschnittene Abschnitte 7 dienen der formschlüssigen Positionierung von Basiselement 3 und Sammelschienenkomponente.

Der Befestigungsmechanismus 2 besteht aus isolierendem Thermoplast-Material und ist im Spritzgussverfahren hergestellt. Das Basiselement 3 ist infolgedessen kastenförmig ausgebildet, mit relativ geringen Wandstärken, die dessen ungeachtet eine hohe Verwindungssteifigkeit des Befestigungsmechanismus 2 sicherstellen. Auch die hakenartigen Vorsprünge 4 sind als Profilkörper mit relativ dünnen Wandungen gestaltet.

Die Verriegelungseinrichtung 5 ist im unteren Bereich des Befestigungsmechanismus 2 angeordnet, in dem keine Kontaktierung der Sammelschienenkomponente mit dem Basiselement 3 erfolgt. In diesem, von vorne frei zugänglichen Bereich ist ein kastenförmiges Lagerelement 8 über dünnwandige Stege 9 mit dem Basiselement 3 verbunden. Die Stege 9 sind im Ausführungsbeispiel im hinteren Bereich des Lagerelementes 8 positioniert. Hierdurch besteht die Möglichkeit, das Lagerelement im wesentlichen um seine hintere, untere Kante zu schwenken, sobald ein Drehmoment um diese, parallel zur Längsachse der Sammelschienen 1 angeordnete Achse eingeleitet wird. Um dies auf einfache Art zu ermöglichen, ist das Lagerelement 8 mit einem von vorn, somit den Sammelschienen 1 abgewandten Seite zugänglichen Schlitz 10 versehen, in den die Klinge eines nicht gezeigten Schraubendrehers eingesteckt werden kann.

Bestandteil der Verriegelungseinrichtung 5 bildet neben dem Lagerelement 8 ein plattenförmiges Element 11, das mit dem Lagerelement 8 verbunden ist. In der von außen nicht beaufschlagten Ausgangsstellung des Lagerelementes 8 befindet sich das plattenförmige Element 11 in einer Stellung, in der es, bezogen auf seine Längserstreckung, im wesentlichen vertikal orientiert ist und mit seiner oberen Stirnfläche mit minimalem Abstand die untere Sammelschiene 1 unten hintergreift. Die Verbindung von Lagerelement 8 und plattenförmigem Element 11 versteift ein zusätzlich an den beiden Elementen 8 und 11 angebrachter Winkelsteg 13.

Beim Aufstecken des Befestigungsmechanismus 2 auf die Sammelschienen 1 kann die Verriegelungseinrichtung 5 nachgeben, indem die untere Sammelschiene 1, bei Kontakt mit dem plattenförmigen Element 11, das über die Stege 9 mit dem Basiselement 3 verbundene Lagerelement 8 geringfügig bezüglich des Basiselementes 3 verschwenkt Ist der Befestigungsmechanismus 2 vollständig auf die Sammelschienen 1 aufgesteckt, wobei die Sammelschienen 1 nunmehr die horizontalen Begrenzungsflächen 14 der hakenartigen Vorsprünge 4 kontaktieren, kommt das plattenförmige Element 11 von der unteren Sammelschiene 1 frei und schwenkt aufgrund der über die Stege 9 aufgebrachten Vorspannung in die in den Figuren gezeigte Ausgangslage zurück, in der das plattenförmige Element 11 diese Sammelschiene 1 hintergreift. Bezogen auf die Vertikale, sind der Befestigungsmechanismus 2 und die Sammelschienen 1 nun zueinander fixiert. Um den Befestigungsmechanismus 2 bzw. Befestigungsmechanismus und die Sammelschienenkomponente von den Sammelschienen 1 abzunehmen, muss nur die Verriegelungseinrichtung 5 aus dem Bereich unter der zugeordneten Sammelschiene 1 herausgeschwenkt werden. Hierzu wird der Schraubendreher in den Schlitz 10 des Lagerelementes 8 eingeführt und geringfügig nach unten geschwenkt. Entsprechend der Schwenkbewegung des Lagerelementes 8 schwenkt das plattenförmige Element 11 aus dem Bereich unterhalb der unteren Sammelschiene 1 heraus. Dann kann die Verbindung von Befestigungsmechanismus 2 und Sammelschienen 1 gelöst werden.

## Patentansprüche

1. Befestigungsmechanismus für eine elektrische Sammelschienenkomponente, mit einem Basiselement (3) zur Aufnahme der Sammelschienenkomponente und am Basiselement (3) angeordneten hakenartigen Vorsprüngen (4) zum Aufstecken auf die Sammelschienen (1), sowie mindestens einer um eine parallel zur Längsachse einer Sammelschiene (1) schwenkbaren Verriegelungseinrichtung (5) zum Festlegen der Sammelschiene (1) zwischen der Verriegelungseinrichtung (5) und dem dieser Sammelschiene (1) zugeordneten hakenartigen Vorsprung (4) in Querrichtung der Sammelschiene, **dadurch gekennzeichnet, dass** der Befestigungsmechanismus (2) einteilig ausgebildet ist, und die Verriegelungseinrichtung (5) ein plattenförmiges Element (11), das mit einer stimseitigen Kontaktfläche (12) für die Sammelschiene (1) versehen ist, sowie ein das plattenförmige Element (11) aufnehmendes Lagerelement (8), das schwenkbar an das Basiselement (3) angebunden ist, aufweist.

2. Befestigungsmechanismus nach Anspruch 1, **dadurch gekennzeichnet, dass** er als Spritzgussteil ausgebildet ist.

3. Befestigungsmechanismus nach Anspruch 1 oder 2, **dadurch gekennzeichnet, dass** er aus isolierendem Material besteht

4. Befestigungsmechanismus nach einem der Ansprüche 1 bis 3, **dadurch gekennzeichnet, dass** er aus einem Thermoplast besteht.

5. Befestigungsmechanismus nach einem der Ansprüche 1 bis 4, **dadurch gekennzeichnet, dass** das Basiselement (3) im wesentlichen Leistenform aufweist.

6. Befestigungsmechanismus nach einem der Ansprüche 1 bis 5, **dadurch gekennzeichnet, dass** das Lagerelement (8) beidseitig über Stege (9) mit dem Basiselement (3) verbunden ist

7. Befestigungsmechanismus nach Anspruch 6, **dadurch gekennzeichnet, dass** die Verbindungen des Lagerelementes (8) mit dem Basiselement (3) in Bezug auf deren Verschwenkung zueinander weich ausgebildet sind.

8. Befestigungsmechanismus nach einem der Ansprüche 1 bis 7, **dadurch gekennzeichnet, dass** das plattenförmige Element (11), in Bezug auf die Plattenebene, steif ausgebildet ist.

9. Befestigungsmechanismus nach einem der Ansprüche 1 bis 8, **dadurch gekennzeichnet, dass** das plattenförmige Element (11) biegesteif mit dem Lagerelement (8) verbunden ist.

10. Befestigungsmechanismus nach einem der Ansprüche 1 bis 9, **dadurch gekennzeichnet, dass** im Bereich der Verbindung von plattenförmigem Element (11) und Lagerelement (8) ein mit diesen verbundener Versteifungssteg (13) angeordnet ist

11. Befestigungsmechanismus nach einem der Ansprüche 1 bis 10, **dadurch gekennzeichnet, dass** das Lagerelement (8) als kastenförmiges Elementes ausgebildet ist, das mit einem Einführungsschlitz (10) für ein Werkzeug versehen ist

## Claims

1. A fixing mechanism for an electrical bus bar component, comprising a base element (3) for receiving the bus bar component and hook-shaped projections (4) arranged on the base element (3) for fitting over the bus bars (1), and comprising at least one locking arrangement (5) swivellable about an axis¹ parallel to the longitudinal axis of a bus bar (1) for fixing the bus bar (1) between the locking arrangement (5) and the hook-like projection (4) associated with this bus bar (1) in the transverse direction of the bus bar, **characterised in that** the fixing mechanism (2) is formed in one piece and the locking arrangement (5) comprises a plate-like element (11) which is provided at its end with a contact face (12) for the bus bar (1) together with a bearing element (8) supporting the plate-like element (11), which bearing element (8) is swivellably connected to the base element (3).

2. A fixing mechanism according to Claim 1, **characterised in that** it is formed as an injection-moulded part.

3. A fixing mechanism according to Claim 1 or 2, **characterised in that** it consists of insulating material.

4. A fixing mechanism according to one of claims 1 to 3, **characterised in that** it consists of a thermoplastic plastics material.

5. A fixing mechanism according to one of claims 1 to 4, **characterised in that** the base element (3) takes substantially the form of a rail.

6. A fixing mechanism according to one of claims 1 to 5, **characterised in that** the bearing element (8) is connected to the base element (3) on both sides by means of bridges (9).

7. A fixing mechanism according to Claim 6, **characterised in that** the connections of the bearing element (8) to the base element (3) are soft with respect to the reciprocal swivelling of said elements.

8. A fixing mechanism according to one of claims 1 to 7, **characterised in that** the plate-like element (11) is rigid with respect to the plane of the plate.

9. A fixing mechanism according to one of claims 1 to 8, **characterised in that** the plate-like element (11) is connected to the bearing element (8) in a deflection-resistant manner.

10. A fixing mechanism according to one of claims 1 to 9, **characterised in that** a reinforcing web (13) is arranged in the area of the connection between the plate-like element (11) and the bearing element (8) and is connected to the latter.

11. A fixing mechanism according to one of claims 1 to 10, **characterised in that** the bearing element (8) takes the form of a box-like element which is provided with an insertion slot (10) for a tool.

## Revendications

1. Mécanisme de fixation pour un composant électrique d'une barre collectrice, comprenant un élément de base (3) pour la réception du composant de barre collectrice et des saillies (4) en forme de crochets disposées sur l'élément de base (3), à des fins d'accrochage à la barre collectrice (1), ainsi qu'au moins un mécanisme de verrouillage apte à pivoter parallèlement à l'axe longitudinal de la barre collectrice (1), pour la localisation de la barre collectrice (1) entre le mécanisme de verrouillage (5) et la saillie (4) en forme de crochet attribué à cette barre collectrice (1), dans la direction transversale de la barre collectrice, **caractérisé en ce que** le mécanisme de fixation (2) est réalisé en une seule pièce et le mécanisme de verrouillage (5) présente un élément en forme de plaque (11) qui est muni d'une surface de contact frontale (12) pour la barre collectrice (1), ainsi qu'un élément de support (8) dans lequel vient se loger l'élément (11) en forme de plaque, qui est raccordé en pivotement à l'élément de base (3).

2. Mécanisme de fixation selon la revendication 1, **caractérisé en ce qu'**il est réalisé sous la forme d'une pièce de moulage par injection.

3. Mécanisme de fixation selon la revendication 1 ou 2, **caractérisé en ce qu'**il est constitué d'une matière isolante.

4. Mécanisme de fixation selon l'une quelconque des revendications 1 à 3, **caractérisé en ce qu'**il est constitué d'une matière thermoplastique.

5. Mécanisme de fixation selon l'une quelconque des revendications 1 à 4, **caractérisé en ce que** l'élément de base (3) présente essentiellement la forme d'une moulure.

6. Mécanisme de fixation selon l'une quelconque des revendications 1 à 5, **caractérisé en ce que** l'élément de support (8) est relié de part et d'autre de l'élément de base (3) via des traverses (9).

7. Mécanisme de fixation selon la revendication 6, **caractérisé en ce que** les liaisons de l'élément de support (8) avec l'élément de base (3), en ce qui concerne leur pivotement l'un par rapport à l'autre, sont réalisées sous forme flexible.

8. Mécanisme de fixation selon l'une quelconque des revendications 1 à 7, **caractérisé en ce que** l'élément (11) en forme de plaque est réalisé de manière rigide par rapport au plan de la plaque.

9. Mécanisme de fixation selon l'une quelconque des revendications 1 à 8, **caractérisé en ce que** l'élément (11) en forme de plaque est réalisé en étant relié à l'élément de support (8) d'une manière résistant à la flexion.

10. Mécanisme de fixation selon l'une quelconque des revendications 1 à 9, **caractérisé en ce que**, dans la zone de la liaison de l'élément (11) en forme de plaque et de l'élément de support (8), est disposée une nervure de renforcement (13) reliée au premier cité.

11. Mécanisme de fixation selon l'une quelconque des revendications 1 à 10, **caractérisé en ce que** l'élément de support (8) est réalisé sous la forme d'un élément en forme de boîte qui est munie d'une fente d'insertion (10) pour un outil.
